# EUROPEAN PATENT SPECIFICATION

(11) **EP 3 121 045 B1**
(45) Date of publication and mention of the grant of the patent: **26.08.2020**
(21) Application number: 15764039.2
(22) Date of filing: 20.03.2015
(51) Int. Cl.: B60K 11/02, B60H 1/00, B60H 1/08, B60H 1/32

(54) **TEMPERATURE CONTROL SYSTEM AND ELECTRIC VEHICLE TO WHICH SAME APPLIES**
TEMPERATURSTEUERUNGSSYSTEM UND ELEKTROFAHRZEUG DAMIT
SYSTÈME DE RÉGULATION DE TEMPÉRATURE ET VÉHICULE ÉLECTRIQUE ADAPTÉ À CELUI-CI

(30) Priority: 21.03.2014 US 201461968801 P
(43) Date of publication of application: 25.01.2017
(73) Proprietor: Aleees Eco Ark (Cayman) Co., Ltd., Grand Cayman KY1-1002 (KY)
(72) Inventor: YANG, Anthony An-Tao, Taoyuan City Taiwan 33449 (TW); CHEN, Gordon Ching, Taoyuan City Taiwan 33449 (TW)
(74) Representative: 2K Patentanwälte Blasberg Kewitz & Reichel
(86) International application number: PCT/CN2015/074767
(87) International publication number: WO 2015/139661

(56) References cited:
- WO-A1-2013/175739
- CN-A- 102 216 413
- DE-A1- 19 521 292
- FR-A1- 2 876 323
- JP-A- 2002 352 866
- JP-A- 2012 017 056
- JP-A- 2014 037 182
- US-A- 5 934 097
- US-A1- 2008 251 235

## Description

### FIELD OF THE INVENTION

The present invention relates to a temperature control system and an electric vehicle using the same, and more particularly to a temperature control system and an electric vehicle using the same changing modes according to the temperature of the environment.

### BACKGROUND OF THE INVENTION

With the development of technology, vehicles have become one of the indispensable transportations in the daily life. Because of the lack of energy and the rise of the concept of environmental protection, electric vehicles driven by electricity gradually become the key point of development of the nowadays industry. In replace of the vehicles driven by fuel, the electric vehicles are expected to enhance the efficiency of energy conversion and reduce the air pollution caused by burning the fuel.

Electric vehicles are using a motor and a motor controller as the main power source. Since a large amount of waste heat will be generated by the electric vehicles during operation, a radiator is utilized by the conventional electric vehicles for cooling the motor and the motor controller in order to keep the motor and the motor controller to operate normally. In other words, the conventional electric vehicles let the cooling water absorb the waste heat generated by the motor and the motor controller through the cooling channels, and then guide the warmed-up cooling water to the radiator, so that the waste heat is volatilized in the air to reach the purpose of cooling by the external air. That is, the cooling efficiency of the conventional electric vehicles is limited by the temperature of the environment. However, if the temperature of the environment is too high, such as that the temperature of the environment is above 35 degrees Celsius, the cooling efficiency of the radiator is significantly decreased, so that the temperature of the cooling water flowing through the motor and the motor controller is higher than the ideal operating temperature, for example 20 degrees Celsius above the ideal operating temperature. Accordingly, the cooling water cannot effectively carry away the waste heat generated by the motor and the motor controller. It is easy to lead the motor and the motor driver at the high operating temperature.

For example, when the temperature of the environment is increased to 35 degrees Celsius, the temperature of the cooling water flowing through the motor and the motor controller may be increased to 50-60 degrees Celsius. Since the ideal operating temperature of the motor and the motor driver is less than 40 degrees Celsius, the waste heat cannot be effectively removed by the conventional electric vehicles when the temperature of the environment is too high, so that the efficiency issues of output power decay and unstable output power of the internal electronic components of the motor and the motor controller are occurred, and further the lifetime of the motor and the motor controller are shortened.

In addition, to ensure the comfort of taking an electric vehicle, a central heating must be provided by the electric vehicles when the temperature of the environment is too low. However, if the central heating is provided through the fuel, the effect of saving energy and reducing carbon cannot be effectively achieved. On the contrary, the consumption of the energy is very huge for generating the central heating with electricity. The number of the capable travelling miles with full charging will be significantly reduced. Therefore, when the temperature of the environment is too low, the conventional electric vehicle cannot effectively produce the central heating, the electric vehicle must be frequently charged, thereby deriving the inconvenience of the utilization.

FR 2 876 323 A1 discloses a temperature regulation device for passenger compartment of motor vehicle. The device has a loop in which a coolant circulates along two opposite direction, in heating and cooling modes of a passenger compartment. A heat exchanger unit of the loop has a case including two heat exchangers that are mounted in parallel and have valves. The valves are mounted in anti-parallel manner to supply the heat exchangers in heating or cooling mode of the passenger compartment.

Therefore, there is a need of providing a temperature control system and an electric vehicle using the same in order to eliminate the above drawbacks.

### SUMMARY OF THE INVENTION

It is an object of the present invention to provide a temperature control system and an electric vehicle using the same in order to change modes corresponding to different temperatures of the environment. The corresponded flow paths are selected to be in communication with each other through a flow path switch so as to be formed as different cooling loops. The issues that the lifetimes of the motor and the motor driver are shortened when the temperature of the environment is too high, the electric vehicle has to be charged frequently when the temperature of the environment is too low, and the inconvenience of the utilization of prior art are solved.

The present invention also provides a temperature control system and an electric vehicle using the same in order to change modes corresponding to different temperatures of the environment. The corresponded flow paths are selected to be in communication with each other through a flow path switch so as to be formed as different cooling loops. The operating temperature of the motor and the motor controller of the electric vehicle is kept at an ideal value, and the central heating is effectively provided by recycling the waste heat of the motor and the motor controller.

In accordance with an aspect of the present invention, there is provided a temperature control system of an electric vehicle. The electric vehicle includes a compartment, a motor and a motor controller. The temperature control system includes a circulation flow path, a liquid temperature adjustment device, a compartment heat exchanger, a heat-dissipation device, a motor cooling circuit and a flow path switch. The circulation flow path includes a first flow path, a second flow path, a third flow path, a fourth flow path and a high-temperature flow path. Cooling fluid is circulated in the circulation flow path. The liquid temperature adjustment device includes a first inlet and a first outlet. The liquid temperature adjustment device is disposed on the first flow path. The compartment heat exchanger includes a second inlet and a second outlet for adjusting a compartment temperature of the compartment. The second inlet is in communication with the first outlet through the first flow path. The heat-dissipation device includes a third inlet and a third outlet. The third inlet is in communication with the second outlet through the second flow path. The motor cooling circuit includes a fourth inlet and a fourth outlet for adjusting the operating temperature of the motor and the motor controller. The fourth inlet is in communication with the third outlet. The flow path switch is connected with the first inlet through the first flow path, connected with the second outlet through the third flow path, and connected with the fourth outlet through the fourth flow path. The high-temperature flow path is disposed between and connected with the second flow path and the fourth flow path, so that the third inlet is in communication with the fourth outlet. The first flow path is selectively changed to be in communication with the third flow path or the fourth flow path by the flow path switch.

In accordance with another aspect of the present invention, there is provided an electric vehicle, which includes a compartment, a motor, a motor controller and a temperature control system. The operation of the motor is controlled by the motor controller. The temperature control system includes a circulation flow path, a liquid temperature adjustment device, a compartment heat exchanger, a heat-dissipation device, a motor cooling circuit and a flow path switch. The circulation flow path includes a first flow path, a second flow path, a third flow path, a fourth flow path and a high-temperature flow path. Cooling fluid is circulated in the circulation flow path. The liquid temperature adjustment device includes a first inlet and a first outlet. The liquid temperature adjustment device is disposed on the first flow path. The compartment heat exchanger includes a second inlet and a second outlet for adjusting a compartment temperature of the compartment. The second inlet is in communication with the first outlet through the first flow path. The heat-dissipation device includes a third inlet and a third outlet. The third inlet is in communication with the second outlet through the second flow path. The motor cooling circuit includes a fourth inlet and a fourth outlet for adjusting the operating temperature of the motor and the motor controller. The fourth inlet is in communication with the third outlet. The flow path switch is connected with the first inlet through the first flow path, connected with the second outlet through the third flow path, and connected with the fourth outlet through the fourth flow path. The high-temperature flow path is disposed between and connected with the second flow path and the fourth flow path, so that the third inlet is in communication with the fourth outlet. The first flow path is selectively changed to be in communication with the third flow path or the fourth flow path by the flow path switch.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the configuration of an electric vehicle according to a preferred embodiment of the present invention;
FIG. 2 schematically illustrates the configuration of a temperature control system according to a preferred embodiment of the present invention;
FIG. 3 schematically illustrates the circuit block diagram of the temperature control system according to a preferred embodiment of the present invention;
FIG. 4 schematically illustrates the configuration of a temperature control system under a normal cooling mode; and
FIG. 5 schematically illustrates the configuration of a temperature control system under an auxiliary cooling mode and a heat-recycling heating mode.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

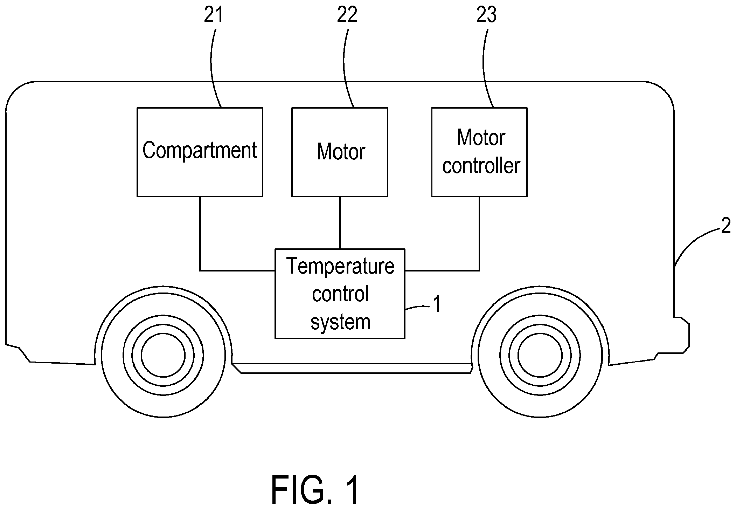

Please refer to FIG. 1. FIG. 1 schematically illustrates the configuration of an electric vehicle according to a preferred embodiment of the present invention. As shown in FIG. 1, an electric vehicle 2 is an electricity-driving vehicle. The electric vehicle 2 includes a compartment 21, a motor 22, a motor controller 23, a transmission system (not shown) and a temperature control system 1. In the electric vehicle 2, the operation of the motor 21 is controlled by the motor controller 22, and the electric vehicle 2 is driven to move by the transmission system driven by the motor 21. In a preferred embodiment, the electric vehicle 2 is an electric bus, and the compartment 21 can be used for carrying a plurality of passengers for using as a tool of the public transport.

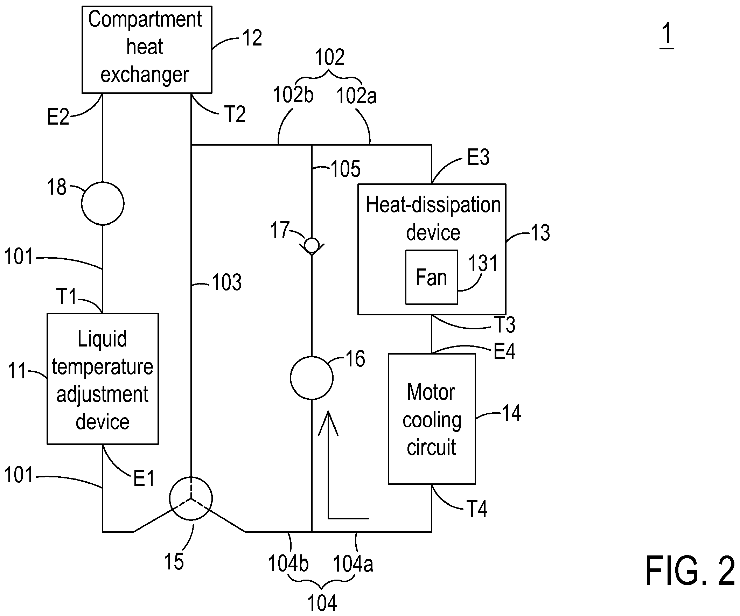

Please refer to FIG. 2. FIG. 2 schematically illustrates the configuration of a temperature control system according to a preferred embodiment of the present invention. As shown in FIG. 2, the temperature control system 1 includes a circulation flow path 10, a liquid temperature adjustment device 11, a compartment heat exchanger 12, a heat-dissipation device 13, a motor cooling circuit 14, a flow path switch 15, a first pump 16, a one-way valve 17, a second pump 18 and a control unit 19. In this embodiment, the circulation flow path 10 and the liquid temperature adjustment device 11, the compartment heat exchanger 12, the heat-dissipation device 13, the motor cooling circuit 14 and the flow path switch 15 are configured as a completely close path, but not limited herein. The close path may include other devices, and cooling fluid (not shown) is circulated in the close path.

The circulation flow path 10 includes a first flow path 101, a second flow path 102, a third flow path 103, a fourth flow path 104 and a high-temperature flow path 105. The cooling fluid is circulated in the circulation flow path 10. The first flow path 101 is configured to be connected with the flow path switch 15, the liquid temperature adjustment device 11 and the compartment heat exchanger 12. The cooling fluid is outputted from the flow path switch 15, and then the cooling fluid is guided to the compartment heat exchanger 12 through the liquid temperature adjustment device 11 along the first flow path 101. The second flow path 102 is configured to be connected with the compartment heat exchanger 12 and the heat-dissipation device 13. The cooling fluid is outputted from the compartment heat exchanger 12, and then the cooling fluid is guided to the heat-dissipation device 13 along the second flow path 102. The third flow path 103 is configured to be connected with the compartment heat exchanger 12 and the flow path switch 15. The cooling fluid is outputted from the compartment heat exchanger 12, and then the cooling fluid is guided to the flow path switch 15 along the third flow path 103. The fourth flow path 104 is configured to be connected with the motor cooling circuit 14 and the flow path switch 15. The cooling fluid is outputted from the motor cooling circuit 14, and then the cooling fluid is guided to the flow path switch 15 along the fourth flow path 104. The high-temperature flow path 105 is configured to be connected with the second flow path 102 and the fourth flow path 104. A portion of the cooling fluid is entered the high-temperature flow path 105 from the fourth flow path 104 and then entered the second flow path 102 along the high-temperature flow path 105.

Please refer to FIG. 2 again. The liquid temperature adjustment device 11 includes a refrigerant compression and cycle device (not shown), a first inlet E1 and a first outlet T1. The liquid temperature adjustment device 11 is disposed on the first flow path 101. In this embodiment, the refrigerant compression and cycle device of the liquid temperature adjustment device 11 has the function of cycle refrigeration that may cool the cooling fluid entered the liquid temperature adjustment device 11. In addition, the liquid temperature adjustment device 11 may adjust the power of the refrigerant compression and cycle device to reduce the temperature of the cooling fluid outputted from the first outlet T1 to a specific temperature, which is preferred to be 5-20 degrees Celsius, according to the demands and a compartment temperature inside the compartment 21. In some embodiments, the refrigerant compression and cycle device of the liquid temperature adjustment device 11 simultaneously has the functions of cycle refrigeration and reverse cycle heating that may selectively start the function of cycle refrigeration or the function of reverse cycle heating. When the compartment temperature is necessary to be reduced, the function of cycle refrigeration is started to cool the cooling fluid entered the liquid temperature adjustment device 11. When the compartment temperature is necessary to be risen, the function of reverse cycle heating is started to heat the cooling fluid entered the liquid temperature adjustment device 11. In some embodiments, the cooling fluid is water, but not limited thereto. The cooling fluid may also be chosen from the fluid having high heat capacity or high thermal conductivity according to the practical applications.

The compartment heat exchanger 12 includes a second inlet E2 and a second outlet T2. The second inlet E2 of the compartment heat exchanger 12 is in communication with the first outlet T1 of the liquid temperature adjustment device 11 through the first flow path 101. In some embodiments, the compartment heat exchanger 12 is disposed in the compartment 21, so that the air inside the compartment 21 is thermally exchanged with the cooling fluid entered the compartment heat exchanger 12 for adjusting the compartment temperature of the compartment 21 through the compartment heat exchanger 12. In some embodiments, the compartment heat exchanger 12 is disposed adjacent to the compartment 21, and the air inside the compartment 21 is thermally exchanged with the cooling fluid entered the compartment heat exchanger 12 through a blowing device (not shown).

The heat-dissipation device 13 is disposed outside the compartment 21 and directly contacted with the outside air, so that the cooling fluid entered the heat-dissipation device 13 is thermally exchanged with the outside air through thermal convection or thermal radiation. In some embodiments, the heat-dissipation device 13 is a radiator, but not limited herein. The heat-dissipation device 13 includes a third inlet E3 and a third outlet T3. The third inlet E3 of the heat-dissipation device 13 is in communication with the second outlet T2 of the compartment heat exchanger 12 through the second flow path 102. In this embodiment, the heat-dissipation device 13 includes a fan 131. A temperature of the cooling fluid measured while entering the heat-dissipation device 13 is defined as an influent temperature. When an environment temperature is lower than the influent temperature of the heat-dissipation device 13, the fan 131 is started by the control unit 19, thereby enhancing the efficiency of the thermal exchange between the cooling fluid entered the heat-dissipation device 13 and the outside air through the fan 131 (i.e. enhancing the temperature-reducing efficiency of the heat-dissipation device 13 toward the cooling fluid). When the environment temperature is higher than the influent temperature of the heat-dissipation device 13, the fan 131 is closed by the control unit 19, thereby avoiding too much thermal exchange between the cooling fluid entered the heat-dissipation device 13 and the outside air, which may cause the cooling fluid outputted from the heat-dissipation device 13 further being risen.

The motor cooling circuit 14 includes a fourth inlet E4 and a fourth outlet T4. The fourth inlet E4 of the motor cooling circuit 14 is in communication with the third outlet T3 of the heat-dissipation device 13. The motor cooling circuit 14 may be structured by at least one flow channel (not shown). The motor cooling circuit 14 is disposed adjacent to the motor 22 and the motor controller 23 of the electric vehicle 2 for thermally exchanging with the motor 22 and the motor controller 23 through the motor cooling circuit 14. In this embodiment, the temperature of the motor 22 and the temperature of the motor controller 23 are measured so as to be defined as an operating temperature. Since a very large amount of heat will be generated by the motor 22 and the motor controller 23 of the electric vehicle 2 during operation and the temperature of the motor 22 and the motor controller 23 will be risen, the heat generated by the motor 22 and the motor controller 23 has to be absorbed by the cooling fluid entered the motor cooling circuit 14 for adjusting the operating temperature of the motor 22 and the motor controller 23, thereby avoiding the operating temperature being higher than the ideal value during operation of the motor 22 and the motor controller 23. In some embodiments, the ideal value of the operating temperature of the motor 22 and the motor controller 23 is 20-40 degrees Celsius, but not limited thereto. Therefore, the electronic components inside the motor 22 and the motor controller 23 are avoided from being under the excessively high temperature, and the advantages of enhancing the lifetimes of the motor 22 and the motor controller 23 are achieved. On the other hand, the high-temperature flow path 15 is disposed between and connected with the second flow path 102 and the fourth flow path 104, so that the third inlet E3 of the heat-dissipation device 13 is in communication with the fourth outlet T4 of the motor cooling circuit 14 through the second flow path 102, the fourth flow path 104 and the high-temperature flow path 105.

Please refer to FIG. 2 again. The flow path switch 15 has three ports that may be simultaneously connected with the first flow path 101, the third flow path 103 and the fourth flow path 104 through the three ports. That is, the flow path switch 15 is connected with the first inlet E1 of the liquid temperature adjustment device 11 through the first flow path 101, connected with the second outlet T2 of the compartment heat exchanger 12 through the third flow path 103, and connected with the fourth outlet T4 of the motor cooling circuit 14 through the fourth flow path 104. In this embodiment, the first flow path 101 is selectively changed to be in communication with the third flow path 103 or the fourth flow path 104 by the flow path switch 15. Therefore, the temperature control system 1 may change modes corresponding to different temperatures of the environment. The corresponded flow paths are selected to be in communication with each other through the flow path switch 15 so as to be formed as different cooling loops. The lifetime and the utilization rate of the electric vehicle 2 are enhanced.

In this embodiment, the second flow path 102 includes a first segment 102a and a second segment 102b. The fourth flow path 104 includes a first segment 104a and a second segment 104b. The first segment 102a of the second flow path 102 is connected with the heat-dissipation device 13, and the second segment 102b of the second flow path 102 is connected with the compartment heat exchanger 12. The first segment 104a of the fourth flow path 104 is connected with the motor cooling circuit 14, and the second segment 104b of the fourth flow path 104 is connected with the flow path switch 105.

In some embodiments, the first pump 16 of the temperature control system 1 is disposed on the high-temperature flow path 15 for more stably guiding the cooling fluid outputted from the motor cooling circuit 14 to the heat-dissipation device 13 through the first segment 104a of the fourth flow path 104, the high-temperature flow path 105 and the first segment 102a of the second flow path 102 in sequence. In addition, the one-way valve 17 of the temperature control system is disposed on the high-temperature flow path 15 and between the first pump 16 and the second flow path 102. Only flowing from the fourth flow path 104 to the second flow path 102 of the cooling fluid is allowed by the one-way valve 17. Flowing from the second flow path 102 to the fourth flow path 104 of the cooling fluid is prohibited, thereby avoiding the cooling fluid, which is not yet heat-dissipated by the heat-dissipation device 13, flowing reverse from the second flow path 102 to the fourth flow path 104. That is, the one-way valve 17 is used for protecting the motor 22 and the motor controller 23. In some embodiments, the second pump 18 is disposed on the first flow path 101, and is preferred to be disposed between the liquid temperature adjustment device 11 and the second inlet E2 of the compartment heat exchanger 12 for more stably guiding the cooling fluid outputted from the liquid temperature adjustment device 11 to the compartment heat exchanger 12.

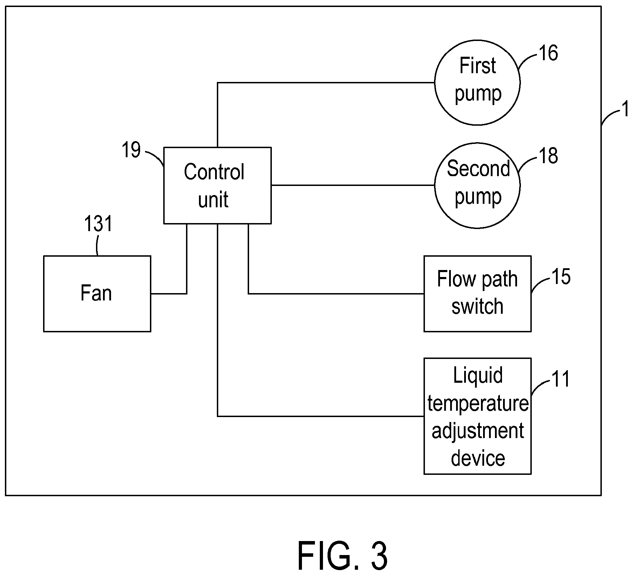

Please refer to FIG. 3. FIG. 3 schematically illustrates the circuit block diagram of the temperature control system according to a preferred embodiment of the present invention. As shown in FIG. 3, the control unit 19 of the temperature control system 1 is respectively and electrically connected with the liquid temperature adjustment device 11, the fan 131, the flow path switch 15, the first pump 16 and the second pump 18 for respectively starting or closing the liquid temperature adjustment device 11, the fan 131 of the heat-dissipation device 13, the flow path switch 15, the first pump 16 and the second pump 18. In order to apply the electric vehicle 2 to different environment temperatures, the temperature control system 1 includes a normal cooling mode, an auxiliary cooling mode and a heat-recycling heating mode (or called auxiliary heating mode), so that the temperature control system 1 may change the operation mode according to the environment temperature. In this embodiment, the normal cooling mode, the auxiliary cooling mode and the heat-recycling heating mode are operated by the control unit 19, and the temperature control system 1 is changed to a corresponded operation mode according to the environment temperature by the control unit 19.

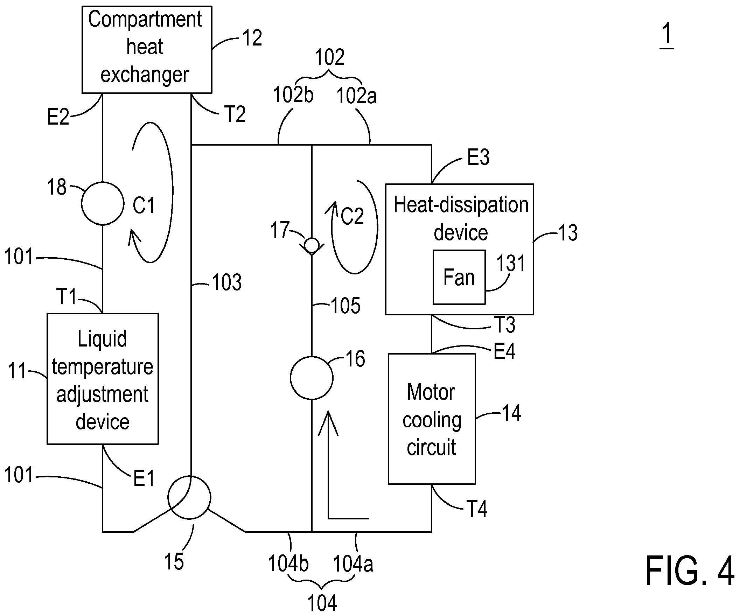

Please refer to FIG. 2 and FIG. 4. FIG. 4 schematically illustrates the configuration of a temperature control system under a normal cooling mode. As shown in FIG. 2 and FIG. 4, when the normal cooling mode is operated by the control unit 19, the flow path switch 15 is driven by the control unit 19 to communicate the first flow path 101 with the third flow path 103 and close the flow path between the flow path switch 15 and the fourth flow path 104, thereby forming a first loop C1 and a second loop C2. The first loop C1 mainly includes the liquid temperature adjustment device 11, the first flow path 101, the second pump 18, the compartment heat exchanger 12, the third flow path 103 and the flow path switch 15. The second loop C2 mainly includes the heat-dissipation device 13, the motor cooling circuit 14, the first segment 104a of the fourth flow path 104, the high-temperature flow path 105, the first pump 16, the one-way valve 17 and the first segment 102a of the second flow path 102.

Please refer to FIG. 4 again. While in the normal cooling mode, the function of cycle refrigeration of the liquid temperature adjustment device 11 is started by the control unit 19 for cooling the cooling fluid entered the liquid temperature adjustment device 11, thereby reducing the temperature of the cooling fluid outputted from the liquid temperature adjustment device 11. Next, the temperature-reduced cooling fluid is guided to the compartment heat exchanger 12 through the second pump 18 for adjusting the temperature of the air inside the compartment 21 through the cooling fluid, the temperature of which is lower than the environment temperature, so that the temperature of the air inside the compartment is reduced. Then, the cooling fluid outputted from the compartment heat exchanger 12 is returned back to the liquid temperature adjustment device 11 through the third flow path 103 and the flow path switch 15. As a result, the cycle of the first loop C1 is completed, and the advantages of adjusting the temperature of the air inside the compartment 21 are achieved.

Please refer to FIG. 4 again. While in the normal cooling mode, the heat-dissipation device 13 is utilized for thermally exchanging the cooling fluid entered the heat-dissipation device 13 with the outside air. Next, the cooling fluid outputted from the heat-dissipation device 13 is entered the motor cooling circuit 14 through the circulation flow path 10, so that the heat generated by the motor 22 and the motor controller 23 is absorbed by the cooling fluid. Then, the cooling fluid outputted from the motor cooling circuit 14 is returned back to the heat-dissipation device 13 through the first segment 104a, the high-temperature 105, the first pump 16, the one-way valve 17 and the first segment 102a of the second flow path 102. As a result, the cycle of the second loop C2 is completed, the operating temperature of the motor 22 and the motor controller 23 is adjusted, and the advantages of avoiding the operating temperature of the motor 22 and the motor controller 23 from being over the ideal value are achieved.

In addition, while in the normal cooling mode, a portion of the cooling fluid cycled in the first loop C1 is entered the second segment 102b of the second flow path 102 from the third flow path 103. Meanwhile, a portion of the cooling fluid cycled in the second loop C2 is entered the second segment 102b of the second flow path 102 from the high-temperature flow path 105. Therefore, the portion of the cooling fluid cycled in the first loop C1 and the portion of the cooling fluid cycled in the second loop C2 are thermally exchanged with each other in the second segment 102b of the second flow path 102. Since the temperature of the cooling fluid of the second loop C2 is higher than the temperature of the cooling fluid of the first loop C1, the liquid temperature adjustment device 11 may moderately share the heat-dissipation job of the heat-dissipation device 13 through the design of the communication between the second flow path 102 and the third flow path 103.

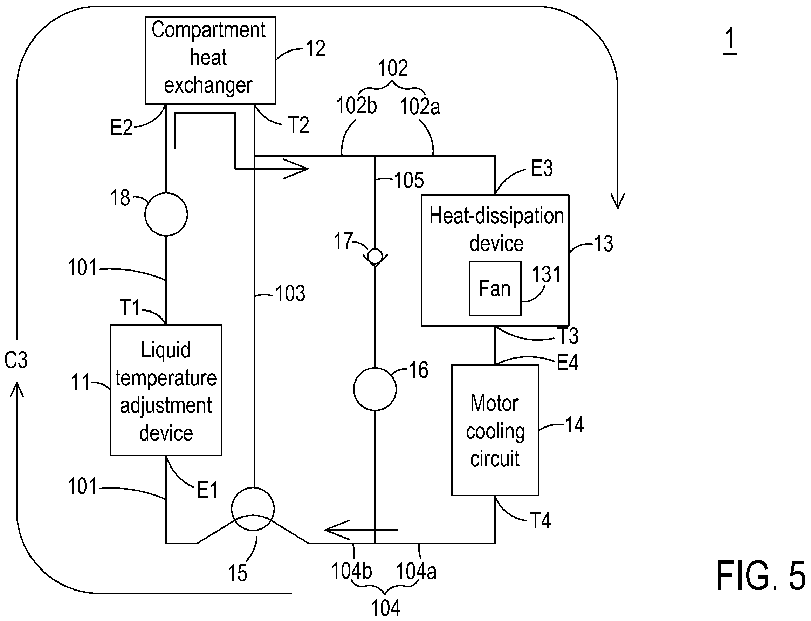

Please refer to FIG. 2 and FIG. 5. FIG. 5 schematically illustrates the configuration of a temperature control system under an auxiliary cooling mode and a heat-recycling heating mode. As shown in FIG. 2 and FIG. 5, when the auxiliary cooling mode and the heat-recycling heating mode are operated by the control unit 19, the flow path switch 15 is driven by the control unit 19 to communicate the first flow path 101 with the fourth flow path 104 and close the flow path between the flow path switch 15 and the third flow path 103, thereby forming a third loop C3. The third loop C3 mainly includes the liquid temperature adjustment device 11, the first flow path 101, the second pump 18, the compartment heat exchanger 12, the second flow path 102, the heat-dissipation device 13, the motor cooling circuit 14, the fourth flow path 104 and the flow path switch 15.

Please refer to FIG. 5 again. While in the auxiliary cooling mode, when the environment temperature is higher than 40 degrees Celsius, or the operating temperature of the motor 22 and the motor controller 23 of the electric vehicle 2 is too high, the temperature control system is changed to the auxiliary cooling mode, so that the two-step cooling operation of the liquid temperature adjustment device 11 and the heat-dissipation device 13 are used for avoiding overheat of the motor 22 and the motor controller 23.

Additionally, while in the auxiliary cooling mode, the function of cycle refrigeration of the liquid temperature adjustment device 11 is started by the control unit 19 for cooling the cooling fluid entered the liquid temperature adjustment device 11, thereby completing the first step of the cooling operation of the cooling fluid of the third loop C3 and reducing the temperature of the cooling fluid outputted from the liquid temperature adjustment device 11. Next, the temperature-reduced cooling fluid is guided to the compartment heat exchanger 12 through the second pump 18 for adjusting the temperature of the air inside the compartment 21 through the cooling fluid, the temperature of which is lower than the environment temperature, so that the first step of the heat-absorbing operation is completed and the temperature of the air inside the compartment is reduced. Then, the cooling fluid outputted from the compartment heat exchanger 12 is guided to the heat-dissipation device 13, the heat-dissipation device 13 is utilized for thermally exchanging the cooling fluid entered the heat-dissipation device 13 with the outside air, thereby completing the second step of the cooling operation of the cooling fluid of the third loop C3. Next, the cooling fluid outputted from the heat-dissipation device 13 is entered the motor cooling circuit 14 through the circulation flow path 10 for absorbing the heat generated by the motor 22 and the motor controller 23 through the cooling fluid and completing the second step of heat-absorbing operation of the cooling fluid of the third loop C3. Then, the cooling fluid outputted from the motor cooling circuit 14 is returned back to the liquid temperature adjustment device 11 through the fourth flow path 104, the flow path switch 15 and the first flow path 101, thereby completing the auxiliary cooling circulation of the third loop C3. In some embodiments, when the auxiliary cooling mode is operated by the control unit 19 and the second step of cooling operation of the cooling fluid is completed, the temperature of the cooling fluid outputted from the heat-dissipation device 13 is preferably 30-40 degrees Celsius.

Please refer to FIG. 5 again. While in the auxiliary cooling mode, the first pump 16 is closed by the control unit 19, and the second pump 18 is kept started by the control unit 19. By the one-way valve 17, the cooling fluid in the second flow path 102 is avoided from reverse flowing to the fourth flow path 104 through the high-temperature flow path 105, which may cause the cooling fluid in the high-temperature flow path 105 being stagnated and unable to be flowed. In other words, when the auxiliary cooling mode is operated by the control unit 19, the cooling fluid can only be cycled along the third loop C3. That is, when located in an area with too much high environment temperature or when the operating temperature of the motor 22 and the motor controller 23 is too high, the temperature control system 1 is changed to the auxiliary cooling mode for cycling the cooling fluid only in a single loop and performing a two-step cooling operation, thereby enhancing the heat-dissipation efficiency of the temperature control system 1 toward the motor 22 and the motor controller 23, and further achieving the advantages of enhancing the adjustment of the operating temperature of the motor 22 and the motor controller 23.

Please refer to FIG. 2 and FIG. 5 again. When the environment temperature is too low, the heat-recycling heating mode is operated by the control unit 19. The liquid temperature adjustment device 11 is closed by the control unit 19 (i.e. the operation of cycle refrigeration of the liquid temperature adjustment device 11 is closed). The first pump 16 is closed by the control unit 19, and the second pump 18 is kept started by the control unit 19, so that the cooling fluid is cycled along the third loop C3. While in the heat-recycling heating mode, the cooling fluid is absorbing the heat in the motor cooling circuit 14, so that the temperature of the cooling fluid outputted from the motor cooling circuit 14 is risen. Next, the high-temperature cooling fluid is guided to the compartment heat exchanger 12 through the fourth flow path 104, the flow path switch 15, the first flow path 101 and the liquid temperature adjustment device 11. Since the liquid temperature adjustment device 11 is closed, the cooling fluid in the first flow path 101 is kept at a fixed temperature. Therefore, the cooling fluid entered the compartment heat exchanger 12 is in a state of high-temperature. Then, the cooling fluid in the state of high-temperature is thermally exchanged with the air inside the compartment 21 through the compartment heat exchanger 12, thereby completing the first step of the heat-dissipation operation of the cooling fluid of the third loop C3. Next, the cooling fluid outputted from the compartment heat exchanger 12 is guided to the heat-dissipation device 13 through the second flow path 102 for completing the second step of the heat-dissipation operation of the cooling fluid of the third loop C3 through the heat-dissipation device 13. Finally, the cooling fluid outputted from the heat-dissipation device 13 is guided to the motor cooling circuit 14 for completing the heat-recycling heating circulation of the third loop C3. In some embodiments, when the heat-recycling heating mode is operated by the control unit 19 and the second step of heat-dissipation operation of the cooling fluid is completed, the temperature of the cooling fluid outputted from the heat-dissipation device 13 is preferably 5-30 degrees Celsius.

In some embodiments, the liquid temperature adjustment device 11 simultaneously has the functions of cycle refrigeration and reverse cycle heating. When the control unit 19 is changed to the heat-recycling heating mode, the function of reverse cycle heating of the liquid temperature adjustment device 11 is started by the control unit 19, and the high-temperature cooling fluid entered the liquid temperature adjustment device 11 is heated, so that the temperature of the cooling fluid outputted from the liquid temperature adjustment device 11 is further risen, thereby enhancing the efficiency of temperature-rising of the air inside the compartment. Therefore, when the control unit 19 is changed to the heat-recycling heating mode, the cooling fluid is cycled in a single loop, so that the waste heat generated by the motor 22 and the motor controller 23 can be transferred to the compartment heat exchanger 12 through the cooling fluid. That is, the cooling fluid whose temperature is higher than the environment temperature is thermally exchanged with the air inside the compartment 21 through the compartment heat exchanger 12, thereby increasing the temperature of the air inside the compartment 21. By recycling the waste heat generated by the motor 22 and the motor controller 23 for generating the central heating, the central heating is effectively generated.

From the above descriptions, the present invention provides a temperature control system and an electric vehicle using the same in order to change modes corresponding to different temperatures of the environment. The corresponded flow paths are selected to be in communication with each other through a flow path switch so as to be formed as different cooling loops. The operating temperature of the motor and the motor controller of the electric vehicle is kept at an ideal value, and the issue that the lifetimes of the motor and the motor driver are shortened when the temperature of the environment is too high is solved. The central heating is effectively provided by recycling the waste heat generated by the motor and the motor controller, and the issue that the electric vehicle has to be charged frequently when the temperature of the environment is too low is solved. The advantages of enhancing the convenience of utilization are achieved.

The present disclosure may be edited or modified by one skilled in this art, however it is intended to cover various modifications and similar arrangements included within the scope of the appended claims.

## Claims

1. A temperature control system (1) of an electric vehicle (2), the electric vehicle comprising a compartment (21), a motor (22) and a motor controller (23), and the temperature control system comprising:
a circulation flow path (10) comprising a first flow path (101), a second flow path (102), a third flow path (103), a fourth flow path (104) and a high-temperature flow path (105), wherein cooling fluid is circulated in the circulation flow path (10);
a liquid temperature adjustment device (11) comprising a first inlet (E1) and a first outlet (T1), wherein the liquid temperature adjustment device (11) is disposed on the first flow path (101);
a compartment heat exchanger (12) comprising a second inlet (E2) and a second outlet (T2) for adjusting a compartment temperature of the compartment (21), wherein the second inlet (E2) is in communication with the first outlet (T1) through the first flow path (101);
a heat-dissipation device (13) comprising a third inlet (E3) and a third outlet (T3), wherein the third inlet (E3) is in communication with the second outlet (T2) through the second flow path (102);
a motor cooling circuit (14) comprising a fourth inlet (E4) and a fourth outlet (T4) for adjusting the operating temperature of the motor (22) and the motor controller (23), wherein the fourth inlet (E4) is in communication with the third outlet (T3); and
a flow path switch (15) connected with the first inlet (E1) through the first flow path (101), connected with the second outlet (T2) through the third flow path (103), and connected with the fourth outlet (T4) through the fourth flow path (104),
wherein the high-temperature flow path (105) is disposed between and connected with the second flow path (102) and the fourth flow path (104), so that the third inlet (E3) is in communication with the fourth outlet (T4), and the first flow path (101) is selectively changed to be in communication with the third flow path (103) or the fourth flow path (104) by the flow path switch (15).

2. The temperature control system according (1) to claim 1 further comprising a first pump (16), wherein the first pump (16) is disposed on the high-temperature flow path (105).

3. The temperature control system (1) according to claim 2 further comprising a one-way valve (17), wherein the one-way valve (17) is disposed on the high-temperature flow path (105) and between the first pump (16) and the second flow path (102).

4. The temperature control system (1) according to claim 3 further comprising a second pump (18), wherein the second pump (18) is disposed on the first flow path (101).

5. The temperature control system (1) according to claim 1, wherein the heat-dissipation device (13) comprises a fan (131), when an environment temperature is lower than an influent temperature of the heat-dissipation device (13), the fan (131) is started, and when the environment temperature is higher than the influent temperature of the heat-dissipation device (13), the fan (131) is closed.

6. The temperature control system (1) according to claim 1 further comprising a control unit (19), wherein a normal cooling mode, an auxiliary cooling mode and a heat-recycling heating mode are operated by the control unit (19).

7. The temperature control system (1) according to claim 6, wherein when the normal cooling mode is operated by the control unit (19), the flow path switch (15) is driven by the control unit (19) to communicate the first flow path (101) with the third flow path (103) and close the flow path between the flow path switch (15) and the fourth flow path (104), and the liquid temperature adjustment device (11) is started by the control unit (19) for cooling the cooling fluid entered the liquid temperature adjustment device (11).

8. The temperature control system (1) according to claim 6, wherein when the auxiliary cooling mode is operated by the control unit (19), the flow path switch (15) is driven by the control unit (19) to communicate the first flow path (101) with the fourth flow path (104) and close the flow path between the flow path switch (15) and the third flow path (103), and the liquid temperature adjustment device (11) is started by the control unit (19) for cooling the cooling fluid entered the liquid temperature adjustment device (11).

9. The temperature control system (1) according to claim 6, wherein when the heat-recycling heating mode is operated by the control unit (19), the flow path switch (15) is driven by the control unit (19) to communicate the first flow path (101) with the fourth flow path (104) and close the flow path between the flow path switch (15) and the third flow path (103), and the liquid temperature adjustment device (11) is closed by the control unit (19).

10. The temperature control system (1) according to claim 6, wherein when the heat-recycling heating mode is operated by the control unit (19), the flow path switch (15) is driven by the control unit (19) to communicate the first flow path (101) with the fourth flow path (104) and close the flow path between the flow path switch (15) and the third flow path (103), and the liquid temperature adjustment device (11) is started by the control unit (19) for heating the cooling fluid entered the liquid temperature adjustment device (11).

11. An electric vehicle (2), comprising:
a compartment (21);
a motor (22);
a motor controller (23), wherein the motor (22) is controlled by the motor controller (23); and
a temperature control system (1), comprising:
a circulation flow path (10) comprising a first flow path (101), a second flow path (102), a third flow path (103), a fourth flow path (104) and a high-temperature flow path (105), wherein cooling fluid is circulated in the circulation flow path (10);
a liquid temperature adjustment device (11) comprising a first inlet (E1) and a first outlet (T1), wherein the liquid temperature adjustment device (11) is disposed on the first flow path (101);
a compartment heat exchanger (12) comprising a second inlet (E2) and a second outlet (T2) for adjusting a compartment temperature of the compartment (21), wherein the second inlet (E2) is in communication with the first outlet (T1) through the first flow path (101);
a heat-dissipation device (13) comprising a third inlet (E3) and a third outlet (T3), wherein the third inlet (E3) is in communication with the second outlet (T2) through the second flow path (102);
a motor cooling circuit (14) comprising a fourth inlet (E4) and a fourth outlet (T4) for adjusting the operating temperature of the motor (22) and the motor controller (23), wherein the fourth inlet (E4) is in communication with the third outlet (T4); and
a flow path switch (15) connected with the first inlet (E1) through the first flow path (101), connected with the second outlet (T2) through the third flow path (103), and connected with the fourth outlet (T4) through the fourth flow path (104),
wherein the high-temperature flow path (105) is disposed between and connected with the second flow path (102) and the fourth flow path (104), so that the third inlet (E3) is in communication with the fourth outlet (T4), and the first flow path (101) is selectively changed to be in communication with the third flow path (103) or the fourth flow path (104) by the flow path switch (15).

## Patentansprüche

1. Temperatur-Steuerungssystem (1) eines Elektrofahrzeugs (2), wobei das Elektrofahrzeug einen Nutzraum (21), einen Motor (22) und eine Motorsteuerung (23) umfasst und das Temperatur-Steuerungssystem umfasst:
einen Zirkulations-Strömungsweg (10) mit einem ersten Strömungsweg (101), einem zweiten Strömungsweg (102), einem dritten Strömungsweg (103), einem vierten Strömungsweg (104) und einem Hochtemperatur-Strömungsweg (105), wobei Kühlfluid in dem Zirkulations-Strömungsweg (10) zirkuliert;
eine Flüssigkeitstemperatur-Einstell-Vorrichtung (11) mit einem ersten Einlass (E1) und einem ersten Auslass (T1), wobei die Flüssigkeitstemperatur-Einstell-Vorrichtung (11) an dem ersten Strömungsweg (101) angeordnet ist;
einen Nutzraum-Wärmetauscher (12) mit einem zweiten Einlass (E2) und einem zweiten Auslass (T2) zum Einstellen einer Nutzraum-Temperatur des Nutzraums (21), wobei der zweite Einlass (E2) über den ersten Strömungsweg (101) mit dem ersten Auslass (T1) in Verbindung steht;
eine Wärmeabfuhr-Vorrichtung (13) mit einem dritten Einlass (E3) und einem dritten Auslass (T3), wobei der dritte Einlass (E3) über den zweiten Strömungsweg (102) mit dem zweiten Auslass (T2) in Verbindung steht;
einen Motorkühl-Kreislauf (14) mit einem vierten Einlass (E4) und einem vierten Auslass (T4) zum Einstellen der Betriebstemperatur des Motors (22) und der Motorsteuerung (23), wobei der vierte Einlass (E4) mit dem dritten Auslass (T3) in Verbindung steht; und
einen Strömungspfadschalter (15), der mit dem ersten Einlass (E1) durch den ersten Strömungspfad (101) verbunden ist, mit dem zweiten Auslass (T2) durch den dritten Strömungspfad (103) verbunden ist und mit dem vierten Auslass (T4) durch den vierten Strömungspfad (104) verbunden ist,
wobei der Hochtemperatur-Strömungspfad (105) zwischen dem zweiten Strömungspfad (102) und dem vierten Strömungspfad (104) angeordnet und mit diesen verbunden ist, so dass der dritte Einlass (E3) mit dem vierten Auslass (T4) in Verbindung steht, und der erste Strömungspfad (101) durch den Strömungspfadschalter (15) selektiv geändert wird, um mit dem dritten Strömungspfad (103) oder dem vierten Strömungspfad (104) in Verbindung zu stehen.

2. Temperatur-Steuerungssystem nach (1) nach Anspruch 1 ferner umfassend eine erste Pumpe (16), wobei die erste Pumpe (16) an dem Hochtemperatur-Strömungsweg (105) angeordnet ist.

3. Temperatur-Steuerungssystem (1) nach Anspruch 2 ferner umfassend ein Einwegventil (17), wobei das Einwegventil (17) an dem Hochtemperatur-Strömungsweg (105) und zwischen der ersten Pumpe (16) und dem zweiten Strömungsweg (102) angeordnet ist.

4. Temperatur-Steuerungssystem (1) nach Anspruch 3 ferner umfassend eine zweite Pumpe (18), wobei die zweite Pumpe (18) an dem ersten Strömungsweg (101) angeordnet ist.

5. Temperatur-Steuerungssystem (1) nach Anspruch 1, wobei die Wärmeabfuhr-Vorrichtung (13) ein Gebläse (131) umfasst, wobei, wenn eine Umgebungstemperatur niedriger als eine Einlasstemperatur der Wärmeabfuhr-Vorrichtung (13) ist, wird das Gebläse (131) gestartet, und wenn die Umgebungstemperatur höher als die Einlasstemperatur der Wärmeabfuhr-Vorrichtung (13) ist, wird das Gebläse (131) geschlossen.

6. Temperatur-Steuerungssystem (1) nach Anspruch 1 ferner umfassend eine Steuerungseinheit (19), wobei ein normaler Kühlmodus, ein Hilfskühlmodus und ein Wärmerückgewinnungs-Heizmodus von der Steuerungseinheit (19) betrieben werden.

7. Temperatur-Steuerungssystem (1) nach Anspruch 6, wobei, wenn der normale Kühlmodus durch die Steuerungseinheit (19) betrieben wird, der Strömungspfadschalter (15) durch die Steuerungseinheit (19) angesteuert wird, um den ersten Strömungspfad (101) mit dem dritten Strömungspfad (103) zu verbinden und den Strömungspfad zwischen dem Strömungspfadschalter (15) und dem vierten Strömungspfad (104) zu schließen, und die Flüssigkeitstemperatur-Einstell-Vorrichtung (11) durch die Steuerungseinheit (19) gestartet wird, um das in die Flüssigkeitstemperatur-Einstell-Vorrichtung (11) eingetretene Kühlfluid zu kühlen.

8. Temperatur-Steuerungssystem (1) nach Anspruch 6, wobei, wenn der Hilfskühlmodus durch die Steuerungseinheit (19) betrieben wird, der Strömungspfadschalter (15) durch die Steuerungseinheit (19) angesteuert wird, um den ersten Strömungspfad (101) mit dem vierten Strömungspfad (104) zu verbinden und den Strömungspfad zwischen dem Strömungspfadschalter (15) und dem dritten Strömungspfad (103) zu schließen, und die Flüssigkeitstemperatur-Einstell-Vorrichtung (11) durch die Steuerungseinheit (19) gestartet wird, um das in die Flüssigkeitstemperatur-Einstell-Vorrichtung (11) eingetretene Kühlfluid zu kühlen.

9. Temperatur-Steuerungssystem (1) nach Anspruch 6, wobei, wenn der Wärmerückgewinnungs-Heizmodus durch die Steuerungseinheit (19) betrieben wird, der Strömungspfadschalter (15) durch die Steuerungseinheit (19) angesteuert wird, um den ersten Strömungspfad (101) mit dem vierten Strömungspfad (104) zu verbinden und den Strömungspfad zwischen dem Strömungspfadschalter (15) und dem dritten Strömungspfad (103) zu schließen, und die Flüssigkeitstemperatur-Einstell-Vorrichtung (11) durch die Steuerungseinheit (19) geschlossen wird.

10. Temperatur-Steuerungssystem (1) nach Anspruch 6, wobei, wenn der Wärmerückgewinnungs-Heizmodus durch die Steuerungseinheit (19) betrieben wird, der Strömungspfadschalter (15) durch die Steuerungseinheit (19) angesteuert wird, um den ersten Strömungspfad (101) mit dem vierten Strömungspfad (104) zu verbinden und den Strömungspfad zwischen dem Strömungspfadschalter (15) und dem dritten Strömungspfad (103) zu schließen, und die Flüssigkeitstemperatur-Einstell-Vorrichtung (11) durch die Steuerungseinheit (19) gestartet wird, um das in die Flüssigkeitstemperatur-Einstell-Vorrichtung (11) eingetretene Kühlfluid zu erwärmen.

11. Elektrofahrzeug (2), umfassend:
einen Nutzraum (21);
einen Motor (22);
eine Motorsteuerung (23), wobei der Motor (22) von der Motorsteuerung (23) gesteuert wird; und
ein Temperatur-Steuerungssystem (1), umfassend:
einen Zirkulations-Strömungsweg (10) mit einem ersten Strömungsweg (101), einem zweiten Strömungsweg (102), einem dritten Strömungsweg (103), einem vierten Strömungsweg (104) und einem Hochtemperatur-Strömungsweg (105), wobei Kühlfluid in dem Zirkulations-Strömungsweg (10) zirkuliert;
eine Flüssigkeitstemperatur-Einstell-Vorrichtung (11) mit einem ersten Einlass (E1) und einem ersten Auslass (T1), wobei die Flüssigkeitstemperatur-Einstell-Vorrichtung (11) an dem ersten Strömungsweg (101) angeordnet ist;
einen Nutzraum-Wärmetauscher (12) mit einem zweiten Einlass (E2) und einem zweiten Auslass (T2) zum Einstellen einer Nutzraum-Temperatur des Nutzraums (21), wobei der zweite Einlass (E2) über den ersten Strömungsweg (101) mit dem ersten Auslass (T1) in Verbindung steht;
eine Wärmeabfuhr-Vorrichtung (13) mit einem dritten Einlass (E3) und einem dritten Auslass (T3), wobei der dritte Einlass (E3) über den zweiten Strömungsweg (102) mit dem zweiten Auslass (T2) in Verbindung steht;
einen Motorkühl-Kreislauf (14) mit einem vierten Einlass (E4) und einem vierten Auslass (T4) zum Einstellen der Betriebstemperatur des Motors (22) und der Motorsteuerung (23), wobei der vierte Einlass (E4) mit dem dritten Auslass (T4) in Verbindung steht; und
einen Strömungspfadschalter (15), der mit dem ersten Einlass (E1) durch den ersten Strömungspfad (101) verbunden ist, mit dem zweiten Auslass (T2) durch den dritten Strömungspfad (103) verbunden ist und mit dem vierten Auslass (T4) durch den vierten Strömungspfad (104) verbunden ist,
wobei der Hochtemperatur-Strömungspfad (105) zwischen dem zweiten Strömungspfad (102) und dem vierten Strömungspfad (104) angeordnet und mit diesen verbunden ist, so dass der dritte Einlass (E3) mit dem vierten Auslass (T4) in Verbindung steht, und der erste Strömungspfad (101) durch den Strömungspfadschalter (15) selektiv geändert wird, um mit dem dritten Strömungspfad (103) oder dem vierten Strömungspfad (104) in Verbindung zu stehen.

## Revendications

1. Système de régulation de température (1) d'un véhicule électrique (2), le véhicule électrique comprenant un compartiment utilitaire (21), un moteur (22) et un contrôleur de moteur (23) et comprenant le système de régulation de température:
un chemin d'écoulement de circulation (10) ayant un premier chemin d'écoulement (101), un deuxième chemin d'écoulement (102), un troisième chemin d'écoulement (103), un quatrième chemin d'écoulement (104) et un chemin d'écoulement à haute température (105), dans lequel un fluide de refroidissement circule dans le chemin de circulation (10);
un dispositif de réglage de la température du fluide (11) ayant une première entrée (E1) et une première sortie (T1), dans lequel le dispositif de réglage de la température du fluide (11) est disposé sur le premier chemin d'écoulement (101);
un échangeur de chaleur de compartiment utilitaire (12) ayant une deuxième entrée (E2) et une deuxième sortie (T2) pour régler une température de compartiment utilitaire (21), la deuxième entrée (E2) communiquant avec la première sortie (T1) par le premier chemin d'écoulement (101);
un dispositif de dissipation de la chaleur (13) ayant une troisième entrée (E3) et une troisième sortie (T3), la troisième entrée (E3) communiquant avec la deuxième sortie (T2) par le deuxième chemin d'écoulement (102);
un circuit de refroidissement du moteur (14) ayant une quatrième entrée (E4) et une quatrième sortie (T4) pour régler la température de fonctionnement du moteur (22) et du contrôleur du moteur (23), la quatrième entrée (E4) communiquant avec la troisième sortie (T3); et
un commutateur de chemin d'écoulement (15) connecté à la première entrée (E1) par le premier chemin d'écoulement (101), connecté à la deuxième sortie (T2) par le troisième chemin d'écoulement (103), et connecté à la quatrième sortie (T4) par le quatrième chemin d'écoulement (104),
dans lequel le chemin d'écoulement à haute température (105) est disposé entre et connecté au deuxième chemin d'écoulement (102) et au quatrième chemin d'écoulement (104) de sorte que la troisième entrée (E3) communique avec la quatrième sortie (T4), et le premier chemin d'écoulement (101) est modifié de manière sélective par le commutateur de chemin d'écoulement (15) pour communiquer avec le troisième chemin d'écoulement (103) ou le quatrième chemin d'écoulement (104).

2. Système de régulation de température selon (1) selon la revendication 1 comprenant en outre une première pompe (16), dans lequel la première pompe (16) est disposée dans le chemin d'écoulement à haute température (105).

3. Système de régulation de température (1) selon la revendication 2, comprenant en outre une vanne unidirectionnelle (17), ladite vanne unidirectionnelle (17) étant située sur le chemin d'écoulement à haute température (105) et entre la première pompe (16) et le second chemin d'écoulement (102).

4. Système de contrôle de température (1) selon la revendication 3, comprenant en outre une deuxième pompe (18), dans lequel la deuxième pompe (18) est située sur le premier chemin d'écoulement (101).

5. Système de contrôle de température (1) selon la revendication 1, dans lequel le dispositif de dissipation de chaleur (13) comprend un ventilateur (131), dans lequel lorsqu'une température ambiante est inférieure à une température d'entrée du dispositif de dissipation de chaleur (13), le ventilateur (131) est mis en marche, et lorsque la température ambiante est supérieure à la température d'entrée du dispositif de dissipation de chaleur (13), le ventilateur (131) est fermé.

6. Système de régulation de température (1) selon la revendication 1, comprenant en outre une unité de commande (19), dans lequel un mode de refroidissement normal, un mode de refroidissement auxiliaire et un mode de chauffage par récupération de chaleur sont exploités par l'unité de commande (19).

7. Système de régulation de la température (1) selon la revendication 6, dans lequel, lorsque le mode de refroidissement normal est actionné par l'unité de commande (19), le commutateur du chemin d'écoulement (15) est commandé par l'unité de commande (19), pour relier le premier chemin d'écoulement (101) au troisième chemin d'écoulement (103) et pour fermer le chemin d'écoulement entre le commutateur de chemin d'écoulement (15) et le quatrième chemin d'écoulement (104), et le dispositif de réglage de la température du liquide (11) est démarré par l'unité de commande (19) pour refroidir le fluide de refroidissement entré dans le dispositif de réglage de la température du liquide (11).

8. Système de régulation de la température (1) selon la revendication 6, dans lequel, lorsque le mode de refroidissement auxiliaire est actionné par l'unité de commande (19), le commutateur du chemin d'écoulement (15) est commandé par l'unité de commande (19), pour relier la première chemin d'écoulement (101) à la quatrième chemin d'écoulement (104) et pour fermer la chemin d'écoulement entre le commutateur de chemin d'écoulement (15) et la troisième chemin d'écoulement (103), et le dispositif de réglage de la température du liquide (11) est mis en marche par l'unité de commande (19) pour refroidir le fluide de refroidissement entré dans le dispositif de réglage de la température du liquide (11).

9. Système de régulation de température (1) selon la revendication 6, dans lequel, lorsque le mode de chauffage par récupération de chaleur est actionné par l'unité de commande (19), le commutateur de chemin d'écoulement (15) est commandé par l'unité de commande (19) pour connecter le premier chemin d'écoulement (101) au quatrième chemin d'écoulement (104) et pour fermer le chemin d'écoulement entre le commutateur de chemin d'écoulement (15) et le troisième chemin d'écoulement (103), et le dispositif de réglage de la température du liquide (11) est fermé par l'unité de commande (19).

10. Système de régulation de la température (1) selon la revendication 6, dans lequel, lorsque le mode de chauffage par récupération de chaleur est actionné par l'unité de commande (19), le commutateur de chemin d'écoulement (15) est commandé par l'unité de commande (19), pour relier la première chemin d'écoulement (101) à la quatrième chemin d'écoulement (104) et pour fermer la chemin d'écoulement entre le commutateur de chemin d'écoulement (15) et la troisième chemin d'écoulement (103), et le dispositif de réglage de la température du liquide (11) est mis en marche par l'unité de commande (19) pour chauffer le fluide de refroidissement entré dans le dispositif de réglage de la température du liquide (11).

11. Un véhicule électrique (2) comprenant :
un compartiment utilitaire (21) ;
un moteur (22) ;
un contrôleur de moteur (23), dans lequel le moteur (22) est commandé par le contrôleur de moteur (23); et
un système de régulation de température (1) comprenant:
un chemin d'écoulement de circulation (10) ayant un premier chemin d'écoulement (101), un deuxième chemin d'écoulement (102), un troisième chemin d'écoulement (103), un quatrième chemin d'écoulement (104) et un chemin d'écoulement à haute température (105), dans lequel un fluide de refroidissement circule dans le chemin de circulation (10) ;
un dispositif de réglage de la température du fluide (11) ayant une première entrée (E1) et une première sortie (T1), dans lequel le dispositif de réglage de la température du fluide (11) est disposé sur le premier chemin d'écoulement (101);
un échangeur de chaleur de compartiment utilitaire (12) ayant une deuxième entrée (E2) et une deuxième sortie (T2) pour régler une température de compartiment utilitaire (21), la deuxième entrée (E2) communiquant avec la première sortie (T1) par le premier chemin d'écoulement (101);
un dispositif de dissipation de la chaleur (13) ayant une troisième entrée (E3) et une troisième sortie (T3), la troisième entrée (E3) communiquant avec la deuxième sortie (T2) par le deuxième chemin d'écoulement (102);
un circuit de refroidissement du moteur (14) ayant une quatrième entrée (E4) et une quatrième sortie (T4) pour régler la température de fonctionnement du moteur (22) et du contrôleur du moteur (23), la quatrième entrée (E4) communiquant avec la troisième sortie (T3); et
un commutateur de chemin d'écoulement (15) connecté à la première entrée (E1) par le premier chemin d'écoulement (101), connecté à la deuxième sortie (T2) par le troisième chemin d'écoulement (103), et connecté à la quatrième sortie (T4) par le quatrième chemin d'écoulement (104),
dans lequel le chemin d'écoulement à haute température (105) est disposé entre et connecté au deuxième chemin d'écoulement (102) et au quatrième chemin d'écoulement (104) de sorte que la troisième entrée (E3) communique avec la quatrième sortie (T4), et le premier chemin d'écoulement (101) est modifié de manière sélective par le commutateur de chemin d'écoulement (15) pour communiquer avec le troisième chemin d'écoulement (103) ou le quatrième chemin d'écoulement (104).
